# EUROPEAN PATENT APPLICATION

(11) **EP 3 480 574 A1**
(43) Date of publication of application: **08.05.2019**
(21) Application number: 17824046.1
(22) Date of filing: 26.06.2017
(51) Int. Cl.: G01K 17/20, G01K 7/02

(54) **HEAT FLUX SENSOR MODULE AND MANUFACTURING METHOD THEREFOR**

(30) Priority: 04.07.2016 JP 2016132563
(71) Applicant: DENSO CORPORATION, Aichi-ken 448-8661 (JP)
(72) Inventor: HARADA, Toshikazu, Kariya-city Aichi 448-8661 (JP); SAKAIDA, Atusi, Kariya-city Aichi 448-8661 (JP); TANIGUCHI, Toshihisa, Kariya-city Aichi 448-8661 (JP); GOUKO, Norio, Kariya-city Aichi 448-8661 (JP); OKAMOTO, Keiji, Kariya-city Aichi 448-8661 (JP)
(74) Representative: Kuhnen & Wacker Patent- und Rechtsanwaltsbüro PartG mbB
(86) International application number: PCT/JP2017/023352
(87) International publication number: WO 2018/008440

(57) **Abstract**

A heat flux sensor module 2 includes: a first film 20 including a first surface 21; a plurality of sensor chips 10 which are disposed spaced apart from each other on the first surface 21 and detect heat flux; a second film 30 stacked on the first surface 21 of the first film 20 so that the plurality of sensor chips 10 are sandwiched between the first film 20 and the second film 30; and a heat conducting member 40 which is disposed between adjacent sensor chips 10 and has higher heat conductivity than air. The heat conducting member 40 is in contact with both the first film 20 and the second film 30.

## Description

### [Technical Field]

The present disclosure relates to a heat flux sensor module and a method of manufacturing the same.

### [Background Art]

Patent Literature (PTL) 1 discloses a measurement device which measures the in-plane distribution of heat flux in a measurement subject. This measurement device includes a sensor module formed by integrating a plurality of sensor portions. The sensor module includes the plurality of sensor portions inside of one multilayer substrate. Thermoelectric conversion elements included in each of the plurality of sensor portions are formed in the same insulating base material.

### [Citation List]

### [Patent Literature]

[PTL 1]: JP 2016-11950 A

### [Summary of the Invention]

### [Technical Problem]

The inventor of the present invention has studied a sensor module having the following structure as a sensor module for measuring the in-plane distribution of heat flux in a measurement subject.

The sensor module includes: a plurality of sensor chips which detect heat flux; a base film including a surface on which the plurality of sensor chips are disposed; and a protective film which protects the plurality of sensor chips. The plurality of sensor chips are disposed spaced apart from each other. The plurality of sensor chips are sandwiched between the base film and the protective film.

However, in a heat flux sensor having such a structure, there may be a layer of air between the base film and the protective film, between adjacent sensor chips. The inventor of the present invention has found the problem of being unable to accurately measure the in-plane distribution of heat flux in a measurement subject in this case, as described below. Specifically, air has low thermal conductivity compared to a metal, a resin, etc. Therefore, upon passage of heat from the measurement subject through the heat flux sensor, the heat does not pass through the layer of air. The heat selectively flows through each of the plurality of sensor chips. As a result, the measurement value of the sensor chip is greater than the ideal level of the heat flux for the location of the sensor chip.

Techniques of the present disclosure relate to providing a heat flux sensor module capable of accurately measuring the in-plane distribution of heat flux in a measurement subject and a method of manufacturing the heat flux sensor module.

### [Solution to Problem]

A first heat flux sensor module which is one aspect of the techniques of the present disclosure measures in-plane distribution of heat flux and includes:
a first film (20) including a first surface (21);
a plurality of sensor chips (10) which are disposed spaced apart from each other on the first surface and detect heat flux;
a second film (30) stacked on the first surface of the first film so that the plurality of sensor chips are sandwiched between the first film and the second film; and
a heat conducting member (40) which is disposed between adjacent ones of the plurality of sensor chips and has higher heat conductivity than air.

The heat conducting member is in contact with both the first film and the second film.

In this heat flux sensor module, the heat conducting member disposed between adjacent sensor chips is in contact with both the first film and the second film. Therefore, upon passage of the heat from the measurement subject through the heat flux sensor module, the heat can pass through a portion between the adjacent sensor chips from one of the first film and the second film to the other via the heat conducting member. Thus, the in-plane distribution of heat flux in a measurement subject can be more accurately measured compared to the case where there is a layer of air between the first film and the second film between adjacent sensor chips.

A second heat flux sensor module which is one aspect of the techniques of the present disclosure measures in-plane distribution of heat flux and includes:
a first film (20) including having a first surface (21);
a plurality of sensor chips (10) which are disposed spaced apart from each other on the first surface and detect heat flux; and
a second film (30) stacked on the first surface of the first film so that the plurality of sensor chips are sandwiched between the first film and the second film.
In the second heat flux sensor module, the first film and the second film are in direct contact between adjacent ones of the plurality of sensor chips.

Accordingly, upon passage of the heat from the measurement subject through the heat flux sensor, the heat can pass through a portion between adjacent sensor chips from one of the first film and the second film to the other. Thus, the in-plane distribution of heat flux in a measurement subject can be more accurately measured compared to the case where there is a layer of air between the first film and the second film between adjacent sensor chips.

A first manufacturing method which is one aspect of the techniques of the present disclosure is a method of manufacturing a heat flux sensor module which measures in-plane distribution of heat flux, the method including:
a step (S1) of preparing a first film (20) including a first surface (21), a plurality of sensor chips (10) that detect heat flux, a second film (30), and a sheet (51) including a material having higher heat conductivity than air;
a step (S2) of forming a stacked body (53) by disposing the plurality of sensor chips spaced apart from each other on the first surface, stacking the sheet on the first surface of the first film to cover the plurality of sensor chips, and stacking the second film on the opposite side of the sheet from that facing the plurality of sensor chips; and
a step (S3) of pressing the stacked body in a stacking direction of the stacked body while heating, wherein
in the step of pressing, the sheet is allowed to flow and move so that a heat conducting member (40) including a material having higher heat conductivity than air is formed between adjacent ones of the plurality of sensor chips in such a way as to contact both the first film and the second film.

In this way, a heat flux sensor module including a heat conducting member can be manufactured by the first manufacturing method. With this heat flux sensor module, as described above, the in-plane distribution of heat flux in a measurement subject can be more accurately measured compared to the case where there is a layer of air between the first film and the second film between adjacent sensor chips.

A second manufacturing method which is one aspect of the techniques of the present disclosure is a method of manufacturing a heat flux sensor module which measures in-plane distribution of heat flux, the method including:
a step (S1) of preparing a first film (20) including a first surface (21), a plurality of sensor chips (10) that detect heat flux, and a second film (30);
a step (S2) of forming a stacked body (55) by disposing the plurality of sensor chips spaced apart from each other on the first surface, disposing a material (54) having higher heat conductivity than air between adjacent ones of the plurality of sensor chips, and stacking the second film on the first surface of the first film to cover the plurality of sensor chips; and
a step (S3) of pressing the stacked body in a stacking direction of the stacked body, wherein
in the step of pressing, a heat conducting member (40) including a material having higher heat conductivity than air is formed between adjacent ones of the plurality of sensor chips in such a way as to contact both the first film and the second film.

In this way, a heat flux sensor module including a heat conducting member can be manufactured by the second manufacturing method. With this heat flux sensor module, as described above, the in-plane distribution of heat flux in a measurement subject can be more accurately measured compared to the case where there is a layer of air between the first film and the second film between adjacent sensor chips.

A third manufacturing method which is one aspect of the techniques of the present disclosure is a method of manufacturing a heat flux sensor module which measures in-plane distribution of heat flux, the method including:
a step (S1) of preparing a first film (20) including a first surface (21), a plurality of sensor chips (10) that detect heat flux, and a second film (30);
a step (S2) of forming a stacked body (56) by disposing the plurality of sensor chips spaced apart from each other on the first surface, and stacking the second film on the first surface of the first film to cover the plurality of sensor chips; and
a step (S3) of pressing the stacked body in a stacking direction of the stacked body while heating, wherein
in the step of pressing, in the state where the stacked body (56) is disposed between a pair of pressing members (62) for pressing, and a pressing assist member (64) more deformable than the pair of pressing members is disposed on at least one of the first film and the second film of the stacked body, between the stacked body and a corresponding one of the pair of pressing members, the stacked body is pressed, and when the pressing assist member is deformed by pressure, the at least one of the first film and the second film is deformed to bring the first film and the second film into direct contact between adjacent ones of the plurality of sensor chips.

In this way, a heat flux sensor module including a first film and a second film in direct contact between adjacent sensor chips can be manufactured by the third manufacturing method. With this heat flux sensor module, as described above, the in-plane distribution of heat flux in a measurement subject can be more accurately measured compared to the case where there is a layer of air between the first film and the second film between adjacent sensor chips.

Note that the reference sign in parentheses for each means in the present section and claims is an example indicating the association with a specific means in the embodiments to be described later.

### [Brief Description of the Drawings]

Fig. 1 is a plan view showing a heat flux distribution measurement device according to the first embodiment.
Fig. 2 is a cross-sectional view taken along line II-II of Fig. 1.
Fig. 3 is a plan view of one sensor chip in Fig. 1 without a front face protective member.
Fig. 4 is a cross-sectional view taken along line IV-IV of Fig. 3.
Fig. 5 is a plan view of the sensor module in Fig. 1 without a protective film.
Fig. 6 is a cross-sectional view taken along line VI-VI of Fig. 5.
Fig. 7 is a flowchart showing a process of manufacturing a sensor module according to the first embodiment.
Fig. 8 shows the positioning of each member in a thermocompression bonding step according to the first embodiment.
Fig. 9 is a plan view of a base film according to the first embodiment on which no layer has yet been stacked.
Fig. 10 is a cross-sectional view (corresponding to Fig. 6) of a base film and a sensor chip stacked thereon according to the first embodiment before thermocompression bonding.
Fig. 11 is a cross-sectional view of a sensor module according to Comparative Example 1, schematically showing heat flux passing through the sensor module from the base film side to the protective film side.
Fig. 12 is a cross-sectional view of a sensor module according to Comparative Example 1, schematically showing heat flux passing through the sensor module from the base film side to the protective film side.
Fig. 13 is a cross-sectional view of a sensor module according to the first embodiment, schematically showing heat flux passing through the sensor module from the base film side to the protective film side.
Fig. 14 is a cross-sectional view of a sensor module according to the first embodiment, schematically showing heat flux passing through the sensor module from the protective film side to the base film side.
Fig. 15A is a cross-sectional view showing a process of manufacturing a sensor module according to the second embodiment.
Fig. 15B is a cross-sectional view showing a process of manufacturing a sensor module according to the second embodiment.
Fig. 15C is a cross-sectional view showing a process of manufacturing a sensor module according to the second embodiment.
Fig. 16 is a plan view showing a heat flux distribution measurement device according to the third embodiment.
Fig. 17 is a cross-sectional view taken along line XVII-XVII of Fig. 16.
Fig. 18 shows the positioning of each member in a thermocompression bonding step according to the third embodiment.
Fig. 19 is a cross-sectional view of a sensor module according to the third embodiment, schematically showing heat flux passing through the sensor module from the base film side to the protective film side.
Fig. 20 is a cross-sectional view of a sensor module according to the third embodiment, schematically showing heat flux passing through the sensor module from the protective film side to the base film side.
Fig. 21 shows the positioning of each member in a thermocompression bonding step according to the fourth embodiment.
Fig. 22 is a cross-sectional view of a sensor module according to the fourth embodiment.
Fig. 23 is a plan view of a sensor module according to another embodiment.
Fig. 24 is a plan view of a sensor module according to another embodiment.

### [Description of the Embodiments]

Hereinafter, embodiments of the techniques of the present disclosure will be described with reference to the drawings. Note that in the description, the same or equivalent parts throughout the following embodiments share the same reference signs.

### (First Embodiment)

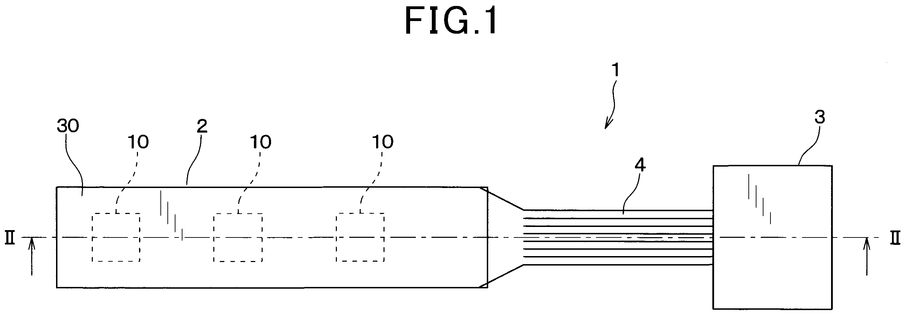

As exemplified in Fig. 1, a heat flux distribution measurement device 1 according to the present embodiment includes a heat flux sensor module (hereinafter referred to as "sensor module") 2 and an arithmetic unit 3.

The sensor module 2 is a measurement unit which measures the distribution of heat flux. The sensor module 2 integrally includes a plurality of sensor chips 10 which detect heat flux. The planar shape of the sensor module 2 is rectangular. The sensor module 2 is connected to the arithmetic unit 3 via a cable 4. The sensor module 2 outputs a sensor signal.

The arithmetic unit 3 includes a microcomputer, a memory, and other peripheral circuits (for example, a central processing unit (CPU), a random-access memory (RAM), a read-only memory (ROM), and an input/output (I/O) unit). The arithmetic unit 3 performs predetermined calculation in accordance with a preset program (for example, a program stored in the ROM). The arithmetic unit 3 calculates the distribution of heat flux on the basis of the sensor signal from the sensor module 2. The arithmetic unit 3 causes a display device (not shown in the drawings) to display the calculated distribution of heat flux.

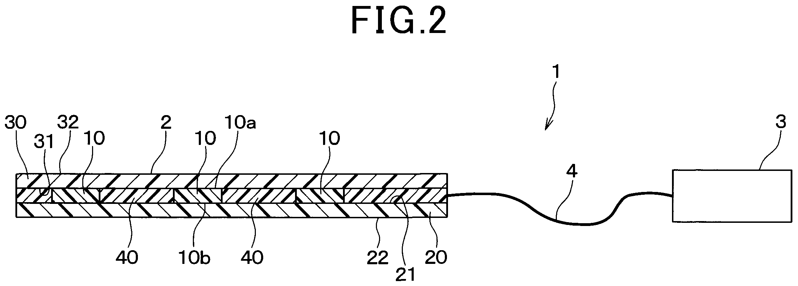

As exemplified in Fig. 2, the sensor module 2 includes a base film 20, the plurality of sensor chips 10, and a protective film 30. The base film 20 corresponds to the first film. The protective film 30 corresponds to the second film.

The base film 20 includes a thermoplastic polyimide.

The base film 20 includes a first surface 21 and a second surface 22 opposite thereto. The first surface 21 is in contact with the plurality of sensor chips 10.

The plurality of sensor chips 10 are disposed on the first surface 21 of the base film 20. The plurality of sensor chips 10 are arranged linearly in one row. The plurality of sensor chips 10 are disposed spaced apart from each other. Each of the plurality of sensor chips 10 outputs a sensor signal corresponding to the level of heat flux passing through the sensor chip 10. The planar shape of one sensor chip 10 is quadrilateral.

As described later, each of the plurality of sensor chips 10 includes an electrically insulated material on which first and second thermoelectric members are formed. The plurality of sensor chips 10 are disposed spaced apart from each other. Therefore, the electrically insulated materials of the respective sensor chips 10 are disposed spaced apart from each other.

The protective film 30 is stacked on the first surface 21 of the base film 20. The protective film 30 covers the plurality of sensor chips 10. Specifically, the protective film 30 is located so that the plurality of sensor chips 10 are sandwiched between the base film 20 and the protective film 30. The protective film 30 includes a thermoplastic polyimide. The protective film 30 includes a first surface 31 and a second surface 32 opposite thereto. The first surface 31 is in contact with the plurality of sensor chips 10.

The base film 20 and the protective film 30 form the outer contour of the sensor module 2. Each of the base film 20 and the protective film 30 includes a thermoplastic polyimide, but may include another thermoplastic resin.

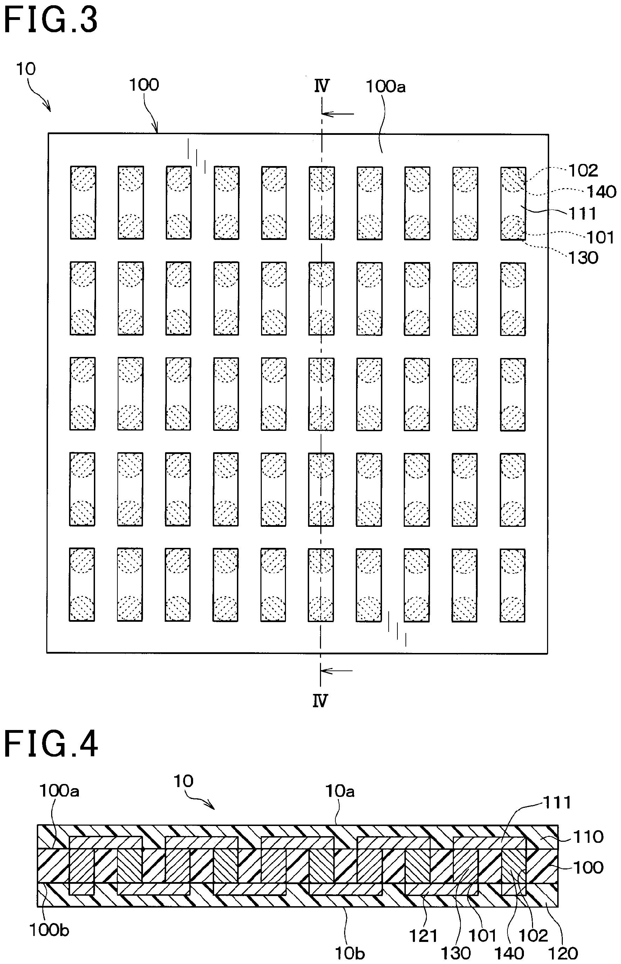

As exemplified in Figs. 3 and 4, the sensor chip 10 integrally includes an electrically insulated material 100, a front face protective member 100, and a rear face protective member 120. Inside this integrated body, a first thermoelectric member 130 and a second thermoelectric member 140 are alternately disposed and connected in series. The outer surface of the front face protective member 110 is a first surface 10a of the sensor chip 10. The outer surface of the rear face protective member 120 is a second surface 10b of the sensor chip 10.

The electrically insulated material 100, the front face protective member 110, and the rear face protective member 120 are each in the form of a film. Each of these elements includes a flexible resin material such as a thermoplastic resin.

The electrically insulated material 100 has a front face 100a and a rear face 100b. The electrically insulated material 100 includes a plurality of first via holes 101 and a plurality of second via holes 102 which penetrate the electrically insulated material 100 in the thickness direction thereof. The first thermoelectric member 130 and the second thermoelectric member 140 which include different thermoelectric materials are embedded in the first via holes 101 and the second via holes 102, respectively. Examples of the thermoelectric materials include a semiconductor material and a metal material.

A front face conductor pattern 111 disposed on a front face 100a of the electrically insulated material 100 forms thereon one connecting part of each of the first thermoelectric member 130 and the second thermoelectric member 140. A rear face conductor pattern 121 disposed on a rear face 100b of the electrically insulated material 100 forms thereon the other connecting part of each of the first thermoelectric member 130 and the second thermoelectric member 140.

Heat flux passes through the sensor chip 10 in a direction from the first surface 10a toward the second surface 10b. At this time, the temperatures on the first surface 10a side and the second surface 10b side of the sensor chip 10 become different. In other words, the temperatures at the one connecting part and the other connecting part of the first thermoelectric member 130 and the second thermoelectric member 140 become different. As a result, a thermoelectromotive force occurs at each of the first thermoelectric member 130 and the second thermoelectric member 140 through the Seebeck effect. The sensor chip 10 outputs this thermoelectromotive force as the sensor signal. Specifically, the sensor chip 10 outputs a voltage as the sensor signal. Note that an electric current generated at this time may be used as the sensor signal.

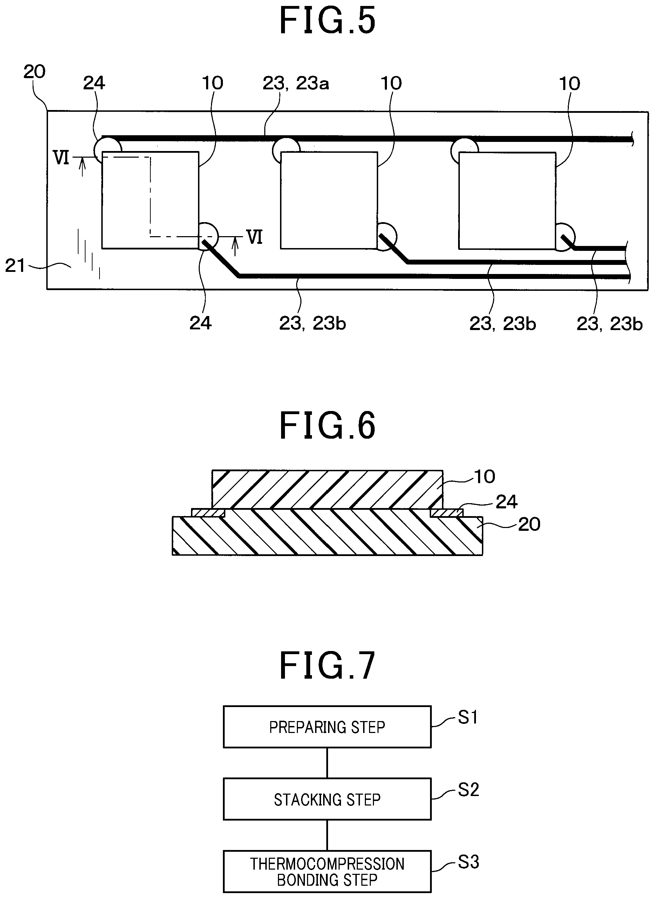

As exemplified in Fig. 5, a plurality of wires 23 are formed on the first surface 21 of the base film 20. The plurality of wires 23 are electrically connected to each of the plurality of sensor chips 10. The plurality of wires 23 are, for example, copper foil formed into a desired wiring pattern. Note that the plurality of wires 23 may be formed of another metal.

The plurality of wires 23 are disposed in such a way as to connect the plurality of sensor chips 10 in parallel with respect to the arithmetic unit 3. Specifically, one sensor chip 10 is connected to two wires 23a and 23b. One of the two wires is a reference potential wire 23a. The other of the two wires is an output wire 23b. The reference potential wire 23a is shared by the plurality of sensor chips 10. The output wire 23b is formed for each of the plurality of sensor chips 10.

As exemplified in Figs. 5 and 6, the sensor chip 10 is connected to the wire 23 via a connecting part 24. The connecting part 24 includes a sintered metal body of a silver-tin alloy. The connecting part 24 is connected to a chip-end terminal (not shown in the drawings) of the sensor chip 10. The connecting part 24 is connected to the wire 23.

As exemplified in Fig. 2, the sensor module 2 further includes a heat conducting member 40. The heat conducting member 40 is disposed between the base film 20 and the protective film 30, between adjacent sensor chips 10. In other words, the heat conducting member 40 is disposed on a portion between the base film 20 and the protective film 30 where the sensor chips 10 are not provided.

The heat conducting member 40 has higher heat conductivity than air. In the present embodiment, the heat conducting member 40 includes a polyether imide. The heat conducting member 40, and may include another thermoplastic resin. Examples of another thermoplastic resin include a polyethylene and a polyimide. The heat conductivity of air is approximately 0.024 [W/(m·K)]. The heat conductivity of a polyether imide is 0.22 [W/(m·K)]. The heat conductivity of a polyethylene is 0.41 [W/(m·K)]. The heat conductivity of a polyimide is 0.28 to 0.34 [W/(m·K)].

The heat conducting member 40 is in contact with both the base film 20 and the protective film 30. More specifically, the entire surface of the heat conducting member 40 on the base film 20 is in contact with the first surface 21 of the base film 20. The entire surface of the heat conducting member 40 on the protective film 30 is in contact with the first surface 31 of the protective film 30.

Furthermore, the heat conducting member 40 is in contact with adjacent sensor chips 10 on both sides. Specifically, the heat conducting member 40 is in contact with the entire side surface of each of the sensor chips 10.

In this way, the heat conducting member 40 is in close contact with the base film 20, the protective film 30, and the sensor chip 10. Therefore, there is no gap or no layer of air between adjacent sensor chips 10.

Next, a method of manufacturing the sensor module 2 according to the present embodiment will be described.

As exemplified in Fig. 7, in the manufacturing method according to the present embodiment, a preparing step S1, a stacking step S2, and a thermocompression bonding step S3 are performed in this order.

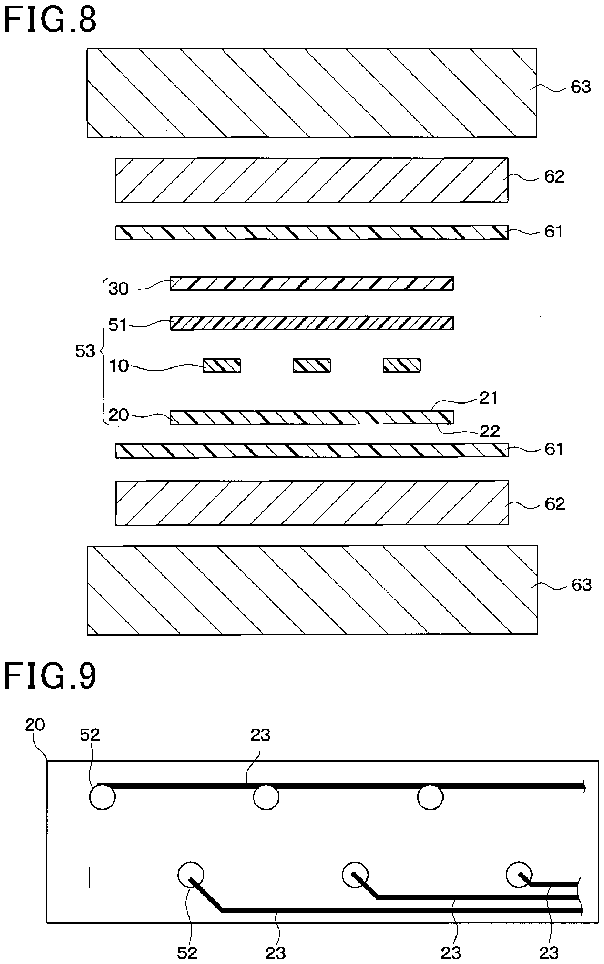

In the preparing step S1, as exemplified in Fig. 8, the base film 20, the plurality of sensor chips 10, the protective film 30, and a sheet 51 for the heat conducting member 40 are prepared.

At this time, as exemplified in Fig. 9, the plurality of wires 23 and silver-tin paste 52 serving as a connecting part material for forming the connecting part have been disposed on a surface of the prepared base film 20. The plurality of wires 23 are formed by etching conductor foil. The silver-tin paste 52 is obtained by adding a solvent into a metal powder including a silver powder and a tin powder to make a paste.

The sensitivity coefficient (that is, the calibration factor) of the plurality of sensor chips 10 prepared has been measured in advance. The sheet 51 is a heat conducting material in the form of a sheet that becomes the heat conducting member 40 in the thermocompression bonding step S3. The sheet 51 includes a polyether imide, for example.

In the stacking step S2, as exemplified in Fig. 8, the base film 20, the plurality of sensor chips 10, the sheet 51, and the protective film 30 are stacked in this order from the bottom to form a stacked body 53.

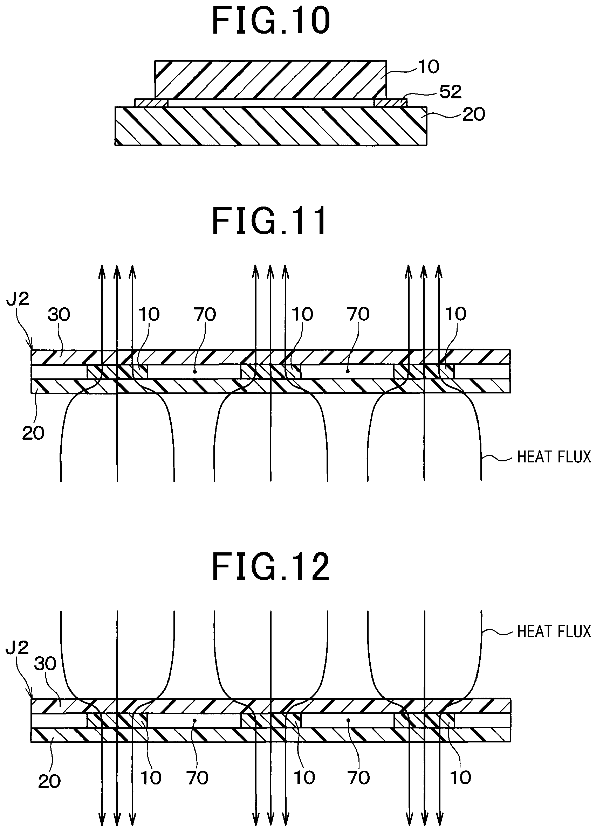

At this time, as exemplified in Fig. 10, the sensor chip 10 and the wire 23 are brought into contact via the sliver-tin paste 52. In other words, the sliver-tin paste 52 is sandwiched between the sensor chip 10 and the base film 20.

In the thermocompression bonding step S3, as exemplified in Fig. 8, the stacked body 53 is pressed by a heating pressing machine in the stacking direction while being heated. At this time, a mold release film 61 and a pressing plate 62 are disposed on both sides of the stacked body 53, on the base film 20 and on the protective film 30. For example, a film including polytetrafluoroethylene is used as the mold release film 61. In this state, the stacked body 53 is sandwiched between heating platens 63 of the heating pressing machine. The heating temperature is the temperature at which the protective film 30, the base film 20, and the sheet 51 soften. Specifically, the heating temperature is 210 to 350 [°C]. The pressure is 1 to 10 [MPa].

In this thermocompression bonding step S3, the sheet 51 softens and flows, moving into the area between adjacent sensor chips 10. Consequently, as exemplified in Fig. 2, the heat conducting member 40 is formed between the adjacent sensor chips 10. The heat conducting member 40 closely contacts both the base film 20 and the protective film 30. The first surface 10a of the sensor chip 10 closely contacts the protective film 30. The second surface 10b of the sensor chip 10 closely contacts the base film 20. In this way, the base film 20, the plurality of sensor chips 10, the heat conducting member 40, and the protective film 30 are bonded by thermal compression.

Furthermore, the metal powder of the silver-tin paste 52 that includes the silver powder and the tin powder is solid-phase sintered. Consequently, the connecting part 24 including the sintered metal body of the silver-tin alloy is formed.

Next, the method of measuring the distribution of heat flux in a measurement subject using the heat flux distribution measurement device 1 according to the present embodiment will be described.

The sensor module 2 is attached to a measurement subject. For example, an adhesive sheet is bonded to a surface of the sensor module 2. The sensor module 2 is attached to a surface of the measurement subject via the adhesive sheet. Alternatively, the sensor module 2 is sandwiched between the measurement subject and a heat dissipating member. With this, measurement of the distribution of heat flux can start.

When the sensor module 2 is attached to the measurement subject, the sensor signal is output from each of the plurality of sensor chips 10. The arithmetic unit 3 obtains the distribution of heat flux on the basis of the sensor signal. The display device displays the distribution of heat flux obtained by the arithmetic unit 3.

Next, advantageous effects of the present embodiment will be described.
(1) The sensor module 2 according to the present embodiment and a sensor module J2 according to Comparative Example 1 are compared. As shown in Figs. 11 and 12, the sensor module J2 according to Comparative Example 1 is different form the sensor module 2 according to the present embodiment in that the heat conducting member 40 is not included.

The sensor module J2 is manufactured by integrating a stacked body including the base film 20, the plurality of sensor chips 10, and the protective film 30 stacked on one another. After the integration of the stacked body, the base film 20 and the protective film 30 are almost flat in shape. Therefore, in the sensor module J2, there is a layer of air 70 between the base film 20 and the protective film 30, between adjacent sensor chips 10.

The heat conductivity of a typical metal is a few dozen [W/(m·K)] to a few hundred [W/(m·K)]. The heat conductivity of air is approximately 0.024 [W/(m·K)]. Thus, the heat conductivity of air is significantly lower than that of a metal, a resin, or the like.

Therefore, when the sensor module J2 is used, the in-plane distribution of heat flux in a measurement subject cannot be more accurately measured. Specifically, in the sensor module J2, as shown in Figs. 11 and 12, upon passage of heat from a measurement subject through the sensor module J2, the heat does not pass through the layer of air 70. The heat selectively flows through each of the plurality of sensor chips 10. As a result, the measurement value of each of the sensor chips 10 is greater than the ideal level of the heat flux for the location of the sensor chip 10. Note that Fig. 11 shows the heat flux flowing when the measurement subject is located on the base film 20 of the sensor module J2. Fig. 12 shows the heat flux when the measurement subject is located on the protective film 30 of the sensor module J2.

Thus, when the sensor module J2 according to Comparative Example 1 is used, the flow of the heat from the measurement subject changes upon passing through the sensor module J2. Therefore, the in-plane distribution of the heat flux measured by the sensor module J2 according to Comparative Example 1 is different form the in-plane distribution of the heat flux in the measurement subject. Particularly, in the state where the intervals between adjacent sensor chips 10 are not equal, the in-plane distribution of the heat flux measured by the sensor module J2 according to Comparative Example 1 is significantly different from the in-plane distribution of the heat flux in the measurement subject.

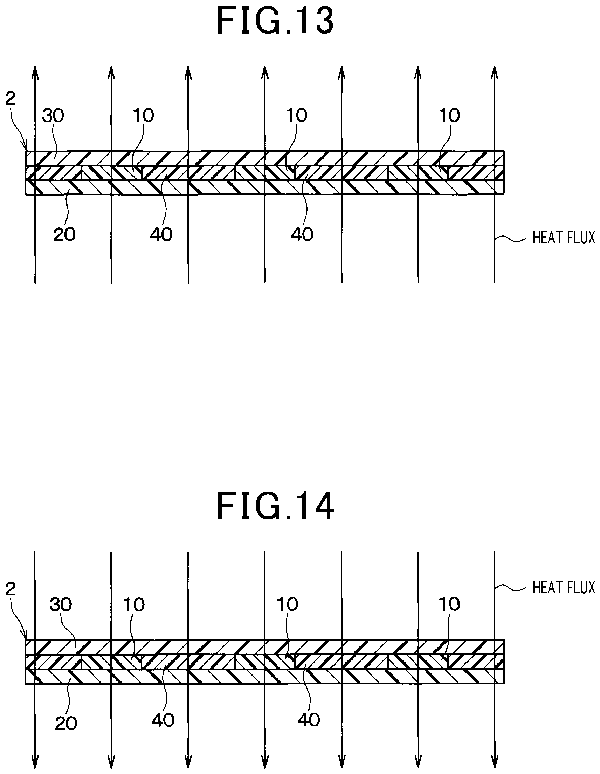

In contrast, in the sensor module 2 according to the present embodiment, the heat conducting member 40 disposed between adjacent sensor chips 10 is in contact with both the base film 20 and the protective film 30. Therefore, as exemplified in Fig. 13, upon passage of the heat from the measurement subject through the sensor module 2, the heat can pass through a portion between the adjacent sensor chips 10 from the base film 20 side to the protective film 30 side via the heat conducting member 40. Fig. 13 shows the heat flux when the measurement subject is located on the base film 20 of the sensor module 2. Likewise, as exemplified in Fig. 14, the heat can pass through a portion between the adjacent sensor chips 10 from the protective film 30 side to the base film 20 side via the heat conducting member 40. Fig. 14 shows the heat flux when the measurement subject is located on the protective film 30 of the sensor module 2.

In this way, the sensor module 2 according to the present embodiment allows uniform passage, instead of selective passage as in Comparative Example 1, of the heat relative to the sensor chips 10. Thus, compared to the sensor module J2 according to Comparative Example 1, the sensor module 2 according to the present embodiment is capable of accurately measuring the in-plane distribution of heat flux in a measurement subject.
(2) The sensor module 2 according to the present embodiment includes the plurality of sensor chips 10. By disposing the plurality of sensor chips 10 as described above, the sensor module 2 having a large area can be easily manufactured. Furthermore, before integration of the plurality of sensor chips 10 with the base film 20 and the protective film 30, the sensor chips 10 can be tested. Accordingly, sensor chips 10 having an internal initial failure can be removed before integration. Furthermore, the sensitivity coefficient of each of the plurality of sensor chips 10 can be measured before integration. Accordingly, the sensor chip 10 having a desired sensitivity coefficient can be selected and disposed before integration.
(3) In the manufacturing of the sensor module 2 according to the present embodiment, the silver-tin plate 52 is used as a connecting part material for forming the connecting part 24. In the thermocompression bonding step S3, the metal powder of the silver-tin paste 52 that includes the silver powder and the tin powder is sintered. Consequently, the connecting part 24 including the sintered metal body of the silver-tin alloy is formed.

Here, assume that solder is used as the connecting part material, unlike the present embodiment. In this case, the solder is melted by heat in the thermocompression bonding step S3, and the sensor chip 10 is displaced by pressure.

In contrast, in the present embodiment, the connecting part material is not melted in the thermocompression bonding step S3. Therefore, the displacement of the sensor chip 10 relative to the base film 20 and the protective film 30 can be suppressed.

### (Second Embodiment)

The present embodiment is different from the first embodiment in the method of manufacturing the sensor module 2.

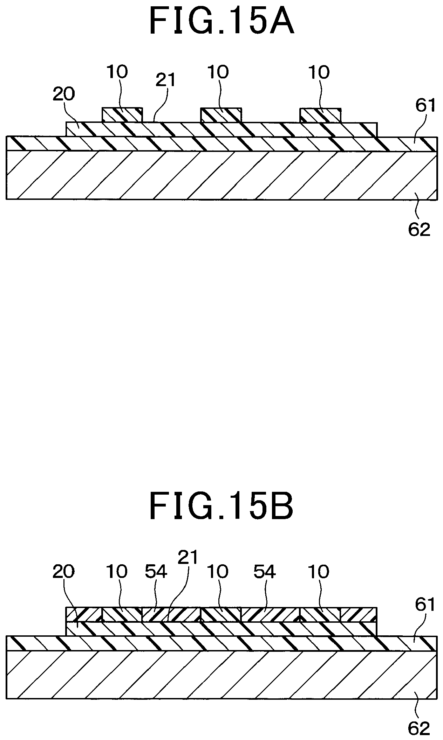

In the stacking step S2, as exemplified in Fig. 15A, the mold release film 61 and the base film 20 are disposed on the press plate 62. Subsequently, the plurality of sensor chips 10 are disposed on the first surface 21 of the base film 20.

Thereafter, as exemplified in Fig. 15B, a heat conducting material 54 having higher heat conductivity than air is selectively applied by screen printing. At this time, the location where the heat conducting material 54 is selectively applied is a region of the first surface 21 of the base film 20 where the plurality of sensor chips 10 are not disposed. In other words, the location where the heat conducting material 54 is selectively applied is a region of the first surface 21 of the base film 20 that is between adjacent sensor chips 10. In the present embodiment, for example, an A-stage epoxy resin is used as the heat conducting material 54. Here, A-stage means the state of an uncured thermosetting resin. Note that another thermosetting resin may be used as the heat conducting material.

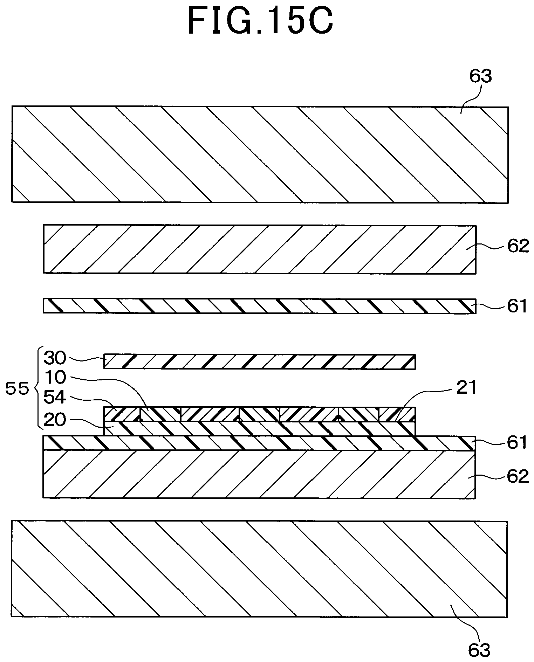

Subsequently, as exemplified in Fig. 15C, the protective film 30 is disposed on the first surface 21 of the base film 20. This results in a stacked body 55.

Subsequently, in the thermocompression bonding step S3, as exemplified in Fig. 15C, the stacked body 55 is pressed by a heating pressing machine while being heated. The heating temperature at this time is 160 to 350 [°C]. The pressure is 1 to 10 [MPa].

Thus, the heat conducting material 54 is cured. As a result, as exemplified in Fig. 2, the heat conducting member 40 is formed between the adjacent sensor chips 10. In this way, the sensor module 2 having the structure exemplified in Fig. 2 can be manufactured as well by the manufacturing method according to the present embodiment.

### (Third Embodiment)

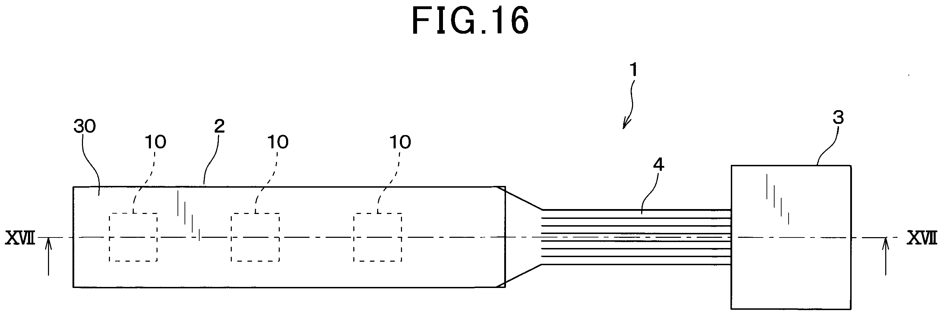

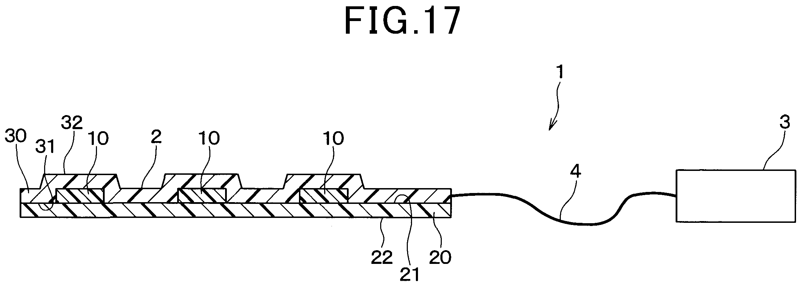

As exemplified in Figs. 16 and 17, the present embodiment is different from the first embodiment in the structure of the sensor module 2.

As exemplified in Fig. 17, in the sensor module 2 according to the present embodiment, the base film 20 and the protective film 30 are in direct contact between adjacent sensor chips 10. In other words, the first surface 21 of the base film 20 and the first surface 31 of the protective film 30 are in direct contact in a region where the plurality of sensor chips 10 are not disposed. The protective film 30 is in close contact with the plurality of sensor chips 10 and the base film 20 without gaps.

The method of manufacturing the sensor module 2 according to the present embodiment is different from that according to the first embodiment as follows.

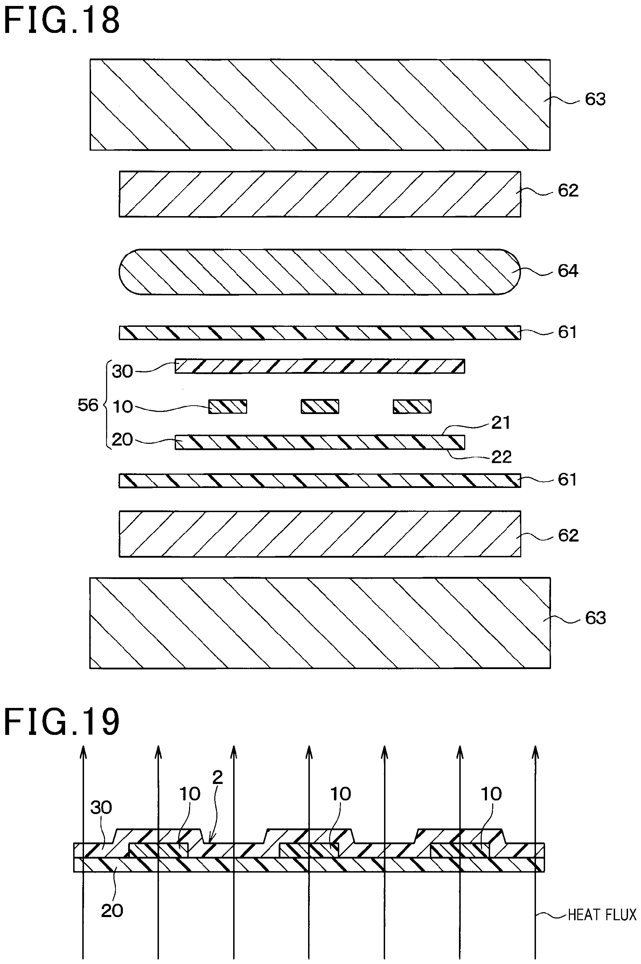

In the preparing step S1, as exemplified in Fig. 18, the base film 20, the plurality of sensor chips 10, and the protective film 30 are prepared.

In the stacking step S2, as exemplified in Fig. 18, the base film 20, the plurality of sensor chips 10, and the protective film 30 are stacked in this order from below to form a stacked body 56.

In the thermocompression bonding step S3, as exemplified in Fig. 18, the stacked body 56 is pressed by a heating pressing machine in the stacking direction while being heated. At this time, the mold release film 61 and the pressing plate 62 are disposed on both sides of the stacked body 56, on the base film 20 and on the protective film 30. Furthermore, on the protective film 30, a buffer material 64 is disposed between the mold release film 61 and the press plate 62. In this state, the stacked body 56 is sandwiched between the heating platens 63 of the heating pressing machine. The heating temperature is the temperature at which the protective film 30 and the base film 20 soften. Specifically, the heating temperature is 280 to 350 [°C]. The pressure is 1 to 10 [MPa].

The buffer material 64 is a pressing assist member which assists the pressing on the protective film 30. Specifically, the buffer material 64 is a member for dispersing the pressure of the heating pressing machine that is applied to the protective film 30. The buffer material 64 has high heat resistance such as not to change properties at the softening temperature of the protective film 30.

The buffer material 64 is deformed at the time of the pressing in the thermocompression bonding step S3. Specifically, the buffer material 64 is a member which exhibits a buffering effect against the pressure of 1 to 10 [MPa]. Examples of the buffer material 64 include a product called "NASLON (registered trademark)" from Nippon Seisen Co., Ltd., which is a cloth including metallic fiber, a product called "RAB" from Mitsubishi Paper Mills Limited., and a product called "Hyper-Sheet (registered trademark)" from W. L. Gore & Associates, Co., Ltd. (Nihon Gore Kabushiki Kaisha).

In the thermocompression bonding step S3, the buffer material 64 pushes, toward the base film 20, a region of the protective film 30 that is not in contact with the sensor chips 10. Thus, the protective film 30 is deformed depending on the shape of the sensor chips 10. As a result, as exemplified in Fig. 17, the protective film 30 closely contacts both the sensor chips 10 and the base film 20.

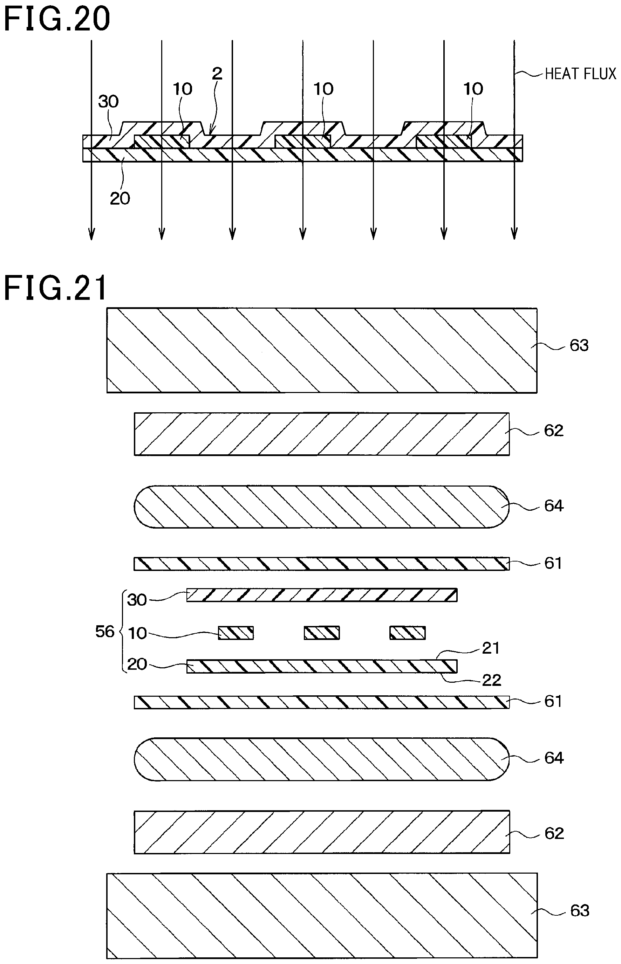

In the sensor module 2 according to the present embodiment, the base film 20 and the protective film 30 are in direct contact between adjacent sensor chips 10. Therefore, as exemplified in Fig. 19, upon passage of the heat from the measurement subject through the sensor module 2, the heat can pass through a portion between the adjacent sensor chips 10 from the base film 20 to the protective film 30. Fig. 19 shows the heat flux when the measurement subject is located on the base film 20 of the sensor module 2. Likewise, as exemplified in Fig. 20, upon passage of the heat from the measurement subject through the heat flux sensor module 2, the heat can pass through a portion between the adjacent sensor chips 10 from the protective film 30 to the base film 20. Fig. 20 shows the heat flux when the measurement subject is located on the protective film 30 of the sensor module 2. Thus, in the present embodiment, advantageous effects similar to those in the first embodiment can be obtained.

Furthermore, in the present embodiment, in the thermocompression bonding step S3, the buffer material 64 is disposed on the protective film 30 facing the stacked body 56. The buffer material 64 is not disposed on the base film 20 facing the stacked body 56. The portion of the stacked body 56 that is on the base film 20 is pressed by the smooth pressing plate 62. Therefore, the surface of the sensor module 2 on the base film 20 can be made flat. Accordingly, when the installation surface of a measurement subject on which the sensor module 2 is installed is flat, the measurement subject and the sensor module 2 can be brought into close contact. Thus, the in-plane distribution of heat flux can be more accurately measured.

### (Fourth Embodiment)

The present embodiment is different from the third embodiment in the method of manufacturing the sensor module 2.

In the thermocompression bonding step S3, as exemplified in Fig. 21, the buffer material 64 is disposed on both sides of the stacked body 56, on the base film 20 and on the protective film 30.

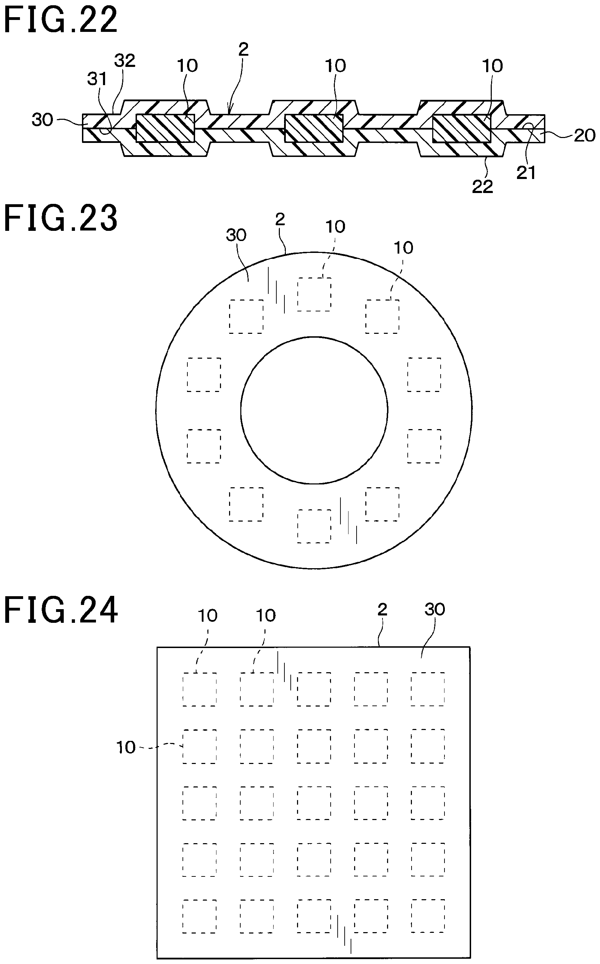

Thus, as exemplified in Fig. 22, in the region where the sensor chips 10 are not disposed, both the protective film 30 and the base film 20 are deformed so that the first surface 31 of the protective film 30 and the first surface 21 of the base film 20 are brought into close contact.

In the present embodiment, even when the sensor chips 10 are so thick that the deformation of the protective film 30 is unable to cover the thickness of the sensor chips 10, the protective film 30 and the base film 20 can be brought into contact.

### (Other Embodiments)

(1) In the above embodiments, the plurality of sensor chips 10 are linearly disposed in the sensor module 2, but this is not limiting. As exemplified in Fig. 23, the plurality of sensor chips 10 may be circularly disposed. In this case, the planar shape of the sensor module 2 may be set to a ring shape. As exemplified in Fig. 24, the plurality of sensor chips 10 may be disposed in a plane (in a matrix). In this case, the planar shape of the sensor module 2 may be set to a quadrilateral shape.
(2) In the second embodiment, the base film 20, the plurality of sensor chips 10, the heat conducting member 40, and the protective film 30 are integrated through thermocompression bonding, but this is not limiting. These elements may be integrated by pressure without heating. In this case, these elements may be integrated using an adhesive, for example.
(3) In the first and second embodiments, in the thermocompression bonding step S3, the buffer material 64 may be used as in the thermocompression bonding step S3 according to the third and fourth embodiments. As a result of using the buffer material 64, gaps can be reduced.
(4) In the above embodiments, the silver-tin paste 52 is used as the connecting part material, but this is not limiting. A metal powder different from the combination of the silver powder and the tin powder may be used as the connecting part material. Specifically, the connecting part 24 may include a sintered metal body different from that of the silver-tin alloy. Note that in order to suppress the displacement of the sensor chip 10 in the thermocompression bonding step S3, a metal powder that is solid-phase sintered is preferably used.
(5) In the first and second embodiments, there is no air between adjacent sensor chips 10, but this is not limiting. There may be a negligible amount of air that is not in the form of a layer. In other words, there may be a gap, for example, between the heat conducting member 40 and each of the films 20 and 30 or between the heating conducting member 40 and the sensor chips 10. Even in this case, advantageous effects similar to those in the first embodiment can be obtained as long as at least the heat conducting member 40 is in contact with both the base film 20 and the protective film 30. Note that in order to reduce gaps between the sensor chips 10 and the heat conducting member 40, the heat conducting member 40 is preferably in contact with the sensor chips 10 as in the first and second embodiments.
(6) The techniques of the present disclosure are not limited to the embodiments described above and can be modified as appropriate within the scope of the claims, including various variations and modifications made within the range of equivalency. The above embodiments are not unrelated to each other and can be combined as appropriate unless the combination is obviously impossible. In each of the above embodiments, the elements included in the embodiment are not necessarily indispensable unless otherwise indicated in particular or considered obviously indispensable in principle, for example. Furthermore, in each of the above embodiments, when numerical figures, such as the number, numerical values, amount, range, etc., of structural elements in the embodiment are mentioned, these specific numerical figures are not limiting unless indicated as required in particular or obviously limited in principle to a specific value, for example. Furthermore, in each of the above embodiments, when the material, shape, positional relationship, etc., of the structural elements are mentioned, these material, shape, positional relationship, etc., are not limiting unless indicated in particular or limited in principle to a specific material, shape, positional relationship, etc., for example.

### (Conclusion)

In the first aspect indicated by a part or all of the above embodiments, a heat flux sensor module includes a first film, a plurality of sensor chips, a second film, and a heat conducting member. The heat conducting member is in contact with both the first film and the second film.

In the second aspect, the heat conducting member is in contact with at least some of the plurality of sensor chips. Thus, gaps between the sensor chips and the heat conducting member can be reduced.

In the third aspect, a heat flux sensor module includes a first film, a plurality of sensor chips, and a second film. In the heat flux sensor module, the first film and the second film are in direct contact between adjacent ones of the sensor chips.

In the fourth aspect, a plurality of wires which are connected to sensor chips are formed on a first surface of the first film. Each of the plurality of sensor chips is connected to at least one of the plurality of wires via connecting parts each including a sintered metal body.

This connecting part is formed as a result of a metal powder being sintered upon heating and pressing a stacked body including the first film, the plurality of sensor chips, and the second film. When the connecting part includes the sintered metal body, the displacement of the sensor chip relative to the first and second films upon heating and pressing the stacked body can be suppressed.

In the fifth aspect, a method of manufacturing a heat flux sensor module includes: a step of preparing; a step of forming a stacked body; and a step of pressing the stacked body while heating. In the step of preparing, a first film, a plurality of sensor chips, a second film, and a sheet are prepared. In the step of forming the stacked body, the plurality of sensor chips are disposed on a first surface of the first film. Subsequently, the sheet is stacked on the first surface of the first film, and the second film is stacked on the opposite side of the sheet from that facing the plurality of sensor chips. In the step of pressing, the sheet is allowed to flow and move so that a heat conducting member is formed between adjacent ones of the plurality of sensor chips in such a way as to contact both the first film and the second film.

In the sixth aspect, a method of manufacturing a heat flux sensor module includes a step of preparing a first film, a plurality of sensor chips, and a second film. In the step of forming a stacked body, the plurality of sensor chips are disposed spaced apart from each other on a first surface of the first film. A material having higher heat conductivity than air is disposed between adjacent ones of the plurality of sensor chips. Subsequently, the second film is stacked on the first surface of the first film to cover the plurality of sensor chips and the material. In the step of pressing, a heat conducting member is formed between adjacent ones of the plurality of sensor chips in such a way as to contact both the first film and the second film.

In the seventh aspect, the step of pressing includes pressing while heating. This option is available.

In the eighth aspect, a method of manufacturing a heat flux sensor module includes a step of preparing a first film, a plurality of sensor chips, and a second film. In the step of forming a stacked body, the plurality of sensor chips are disposed spaced apart from each other on a first surface of the first film. Subsequently, the second film is stacked on the first surface of the first film to cover the plurality of sensor chips. In the step of pressing, a stacked body is disposed between a pair of pressing members for pressing. A pressing assist member more deformable than the pair of pressing members is disposed on at least one of the first film and the second film, between the stacked body and a corresponding one of the pair of pressing members. In this state, the stacked body is pressed. The pressing assist member is deformed by this pressure. Consequently, at least one of the first film and the second film is deformed to bring the first film and the second film into direct contact between adjacent ones of the plurality of sensor chips.

In the ninth aspect, the step of preparing in the fifth, seventh, and eighth aspects includes preparing a first film including a first surface on which a plurality of wires to be connected to the plurality of sensor chips are formed. In the step of forming a stacked body, the plurality of wires and the plurality of sensor chips are brought into contact via a metal powder. In the step of pressing, the metal powder is sintered to form a connecting part that connects each of the plurality of sensor chips and the plurality of wires and includes a sintered metal body.

In this way, the metal powder is used as a material that forms the connecting part. Upon pressing the stacked body while heating, this metal powder is sintered to form the connecting part. Thus, upon pressing the sintered body while heating, the displacement of the sensor chips relative to the first and second films can be suppressed.

### [Reference Signs List]

- 2: Sensor module
- 10: Sensor chip
- 20: Base film
- 30: Protective film
- 40: Heat conducting member

## Claims

1. A heat flux sensor module which measures in-plane distribution of heat flux, the heat flux sensor module comprising:
a first film (20) including a first surface (21);
a plurality of sensor chips (10) which are disposed spaced apart from each other on the first surface and detect heat flux;
a second film (30) stacked on the first surface of the first film so that the plurality of sensor chips are sandwiched between the first film and the second film; and
a heat conducting member (40) which is disposed between adjacent ones of the plurality of sensor chips and has higher heat conductivity than air, wherein
the heat conducting member is in contact with both the first film and the second film.

2. The heat flux sensor module according to claim 1, wherein
the heat conducting member is in contact with at least some of the plurality of sensor chips.

3. A heat flux sensor module which measures in-plane distribution of heat flux, the heat flux sensor module comprising:
a first film (20) including a first surface (21);
a plurality of sensor chips (10) which are disposed spaced apart from each other on the first surface and detect heat flux; and
a second film (30) stacked on the first surface of the first film so that the plurality of sensor chips are sandwiched between the first film and the second film, wherein
the first film and the second film are in direct contact between adjacent ones of the plurality of sensor chips.

4. The heat flux sensor module according to any one of claims 1 to 3, wherein
a plurality of wires (23) which are connected to sensor chips are formed on the first surface, and
each of the plurality of sensor chips is connected to at least one of the plurality of wires via connecting parts (24) each including a sintered metal body.

5. A method of manufacturing a heat flux sensor module which measures in-plane distribution of heat flux, the method comprising:
a step (S1) of preparing a first film (20) including a first surface (21), a plurality of sensor chips (10) which detect heat flux, a second film (30), and a sheet (51) including a material having higher heat conductivity than air;
a step (S2) of forming a stacked body (53) by disposing the plurality of sensor chips spaced apart from each other on the first surface, stacking the sheet on the first surface of the first film to cover the plurality of sensor chips, and stacking the second film on the opposite side of the sheet from that facing the plurality of sensor chips; and
a step (S3) of pressing the stacked body in a stacking direction of the stacked body while heating, wherein
in the step of pressing, the sheet is allowed to flow and move so that a heat conducting member (40) including the material is formed between adjacent ones of the plurality of sensor chips in such a way as to contact both the first film and the second film.

6. A method of manufacturing a heat flux sensor module which measures in-plane distribution of heat flux, the method comprising:
a step (S1) of preparing a first film (20) including a first surface (21), a plurality of sensor chips (10) which detect heat flux, and a second film (30);
a step (S2) of forming a stacked body (55) by disposing the plurality of sensor chips spaced apart from each other on the first surface, disposing a material (54) having higher heat conductivity than air between adjacent ones of plurality of sensor chips, and stacking the second film on the first surface of the first film to cover the plurality of sensor chips and the material; and
a step (S3) of pressing the stacked body in a stacking direction of the stacked body, wherein
in the step of pressing, a heat conducting member (40) including the material is formed between adjacent ones of the plurality of sensor chips in such a way as to contact both the first film and the second film.

7. The method of manufacturing a heat flux sensor module according to claim 6, wherein in the step of pressing, the stacked body is pressed while being heated.

8. A method of manufacturing a heat flux sensor module which measures in-plane distribution of heat flux, the method comprising:
a step (S1) of preparing a first film (20) including a first surface (21), a plurality of sensor chips (10) which detect heat flux, and a second film (30);
a step (S2) of forming a stacked body (56) by disposing the plurality of sensor chips spaced apart from each other on the first surface, and stacking the second film on the first surface of the first film to cover the plurality of sensor chips; and
a step (S3) of pressing the stacked body in a stacking direction of the stacked body while heating, wherein
in the step of pressing, in the state where the stacked body is disposed between a pair of pressing members (62) for pressing, and a pressing assist member (64) more deformable than the pair of pressing members is disposed on at least one of the first film and the second film of the stacked body, between the stacked body and a corresponding one of the pair of pressing members, the stacked body is pressed, and when the pressing assist member is deformed by pressure, the at least one of the first film and the second film is deformed to bring the first film and the second film into direct contact between adjacent ones of the plurality of sensor chips.

9. The method of manufacturing a heat flux sensor module according to any one of claims 5, 7, and 8, wherein
in the step of preparing, the first film including the first surface on which a plurality of wires (23) are formed is prepared, the plurality of wires (23) being connected to the plurality of sensor chips,
in the step of forming a stacked body, the plurality of wires and the plurality of sensor chips are brought into contact via a metal powder (52), and
in the step of pressing, the metal powder is sintered to form a connecting part (24) that connects each of the plurality of sensor chips and the plurality of wires and includes a sintered metal body.
